# EUROPÄISCHE PATENTSCHRIFT

(11) **EP 2 139 665 B1**
(45) Veröffentlichungstag und Bekanntmachung des Hinweises auf die Patenterteilung: **23.10.2013**
(21) Anmeldenummer: 08706877.1
(22) Anmeldetag: 07.02.2008
(51) Int. Cl.: B29C 49/42, B65G 29/00

(54) **VERFAHREN UND VORRICHTUNG ZUR BLASFORMUNG VON BEHÄLTERN**
METHOD AND DEVICE FOR BLOW-MOULDING CONTAINERS
PROCÉDÉ ET DISPOSITIF DE MOULAGE PAR SOUFFLAGE DE RÉCIPIENTS

(30) Priorität: 07.03.2007 DE 102007011060
(43) Veröffentlichungstag der Anmeldung: 06.01.2010
(73) Patentinhaber: KHS Corpoplast GmbH, 22145 Hamburg (DE)
(72) Erfinder: LITZENBERG, Michael, 21502 Geesthacht (DE); LINKE, Michael, 22047 Hamburg (DE); BAUMGARTE, Rolf, 22926 Ahrensburg (DE); LEWIN, Frank, 22889 Tangstedt (DE)
(74) Vertreter: Hausfeld, Norbert
(86) Internationale Anmeldenummer: PCT/DE2008/000253
(87) Internationale Veröffentlichungsnummer: WO 2008/106921

(56) Entgegenhaltungen:
- WO-A-2007/077320
- DE-A1- 3 837 118
- DE-A1- 10 017 050
- FR-A- 2 867 171
- FR-A- 2 872 805
- FR-A- 2 895 384
- US-A- 3 975 260

## Beschreibung

Die Erfindung betrifft ein Verfahren zur Blasformung von Behältern gemäß dem Oberbegriff des Anspruchs 1.

Die Erfindung betrifft darüber hinaus eine Vorrichtung zur Blasformung von Behältern gemäß dem Oberbegriff des Anspruchs 9.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzu-treffen. Es ist aber auch möglich, relativ zueinander ver-schiebliche oder andersartig geführte Formträger einzu-setzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Für die Handhabung der Vorformlinge und zur Handhabung der geblasenen Behälter werden innerhalb der Blasmaschine häufig sogenannte Übergaberäder verwendet, die mit Tragelementen für die Vorformlinge oder Flaschen ausgestattet sind. Die Tragelemente können hierbei entweder direkt auf die Vorformlinge oder Flaschen zugreifen, oder separate Transportelemente befördern, die ihrerseits direkt die Vorformlinge oder Flaschen haltern. Zur Unterstützung von Übergabevorgängen sind die Tragelemente relativ zum Übergaberad typischerweise verschwenkbar gelagert. Zusätzlich ist häufig auch eine Teleskopierbarkeit realisiert. Zur Positionsvorgabe für die Tragelemente werden Kurvensteuerungen verwendet. Die Tragelemente werden hierzu mit Kurvenrollen an ortsfest angeordneten Kurven vorbeigeführt.

Ein Problem bei der Verwendung von derartigen mit Tragelementen versehenen Übergaberädern besteht darin, bei einem Auftreten von mechanischen Störungen, insbesondere bei einem Auftreten von Kollisionen, schwere schäden zu vermeiden. Hierzu ist es bekannt, die Tragarme unter Verwendung von Überlastkupplungen im Bereich der Übergaberäder zu lagern. Derartige Überlastkupplungen sind zum einen teuer und vergrößern darüber hinaus das Baugewicht der rotierenden Übergaberäder.

Es ist ebenfalls bereits bekannt, die Tragarme mit aktiven Positionierelementen auszustatten, die pneumatisch oder elektrisch ein Ausfahren bzw. Einfahren der Tragarme derart vorgeben, daß diese in einer Arbeitspositionierung oder einer Ruhepositionierung angeordnet sind. Entsprechende Positioniereinrichtungen verursachen jedoch relativ hohe Kosten und vergrößern das Baugewicht des Übergaberades, so daß vergrößerte Trägheitseigenschaften auftreten.

Aus der FR 2 872 805 A sind ein gattungsgemäßes Verfahren und eine gattungsgemäße Vorichtung bekannt, wobei ein verschwenkbares Kurvensegment im Bereich eines Übergaberades derart verwendet wird, daß Tragelemente für Vorformlinge in Abhängigkeit von einer Positionierung des Kurvensegmentes zu vorgebbaren Zeitpunkten vom Vorformling getrennt werden können.

Aus der nachveröffentlichten WO 2007/077320 ist es bekannt, ein verschwenkbares Kurvensegment dazu zu verwenden, Haltezangen für Behälter in einer Aussonderungspositionierung anzuordnen, die ein Aussondern von fehlerhaften Behältern ermöglicht. Aufgabe der vorliegenden Erfindung ist es daher, ein Verfahren der einleitend genannten Art derart zu verbessern, daß bei einfachem mechanischen Aufbau eine hohe Betriebssicherheit erreicht wird.

Diese Aufgabe wird durch das Verfahren gemäß Anspruch 1 gelöst.

Weitere Aufgabe der vorliegenden Erfindung ist es, eine Vorrichtung der einleitend genannten Art derart zu konstruieren, daß bei einfachem konstruktiven Aufwand eine hohe Betriebssicherheit unterstützt wird.

Diese Aufgabe wird durch die Vorrichtung gemäß Anspruch 9 gelöst.

Durch die Verwendung des beweglichen Kurvensegmentes ist es möglich, die Tragelemente in einem Übergabebereich von einer Übergabeposition fernzuhalten. Es erweist sich als ausreichend, die Tragelemente nur im Bereich der vorgesehenen Übergabe von einem normalen Arbeitsablauf abweichend zu positionieren. Entlang des sonstigen Transportweges können die Transportelemente der für einen üblichen Betriebsablauf vorgesehenen Kurvenbahn folgen.

Gemäß einem üblichen Arbeitsablauf ist ein Übergaberad mit einem Eingabebereich und einem Ausgabebereich ver-sehen. Es ist prinzipiell möglich, sowohl im Eingabebereich als auch im Ausgabebereich positionierbare Kurvensegmente anzuordnen. Die positionierbaren Kurvensegmente können hierbei jeweils mit einem Stellantrieb gekoppelt sein, insbesondere erweist es sich aber bei üblichen Anwendungen als ausreichend, beide beweglichen Kurvensegmente gemeinsam unter Verwendung nur eines Antriebselementes zu positionieren.

Eine kompakte Anordnung wird erfindungsgemäß dadurch unterstützt, daß das bewegliche Kurvensegment auf einem anderen Höhenniveau als eine Kurvenbahn der Kurvensteuerung angeordnet wird.

Eine kontinuierliche Führung der Tragelemente wird erfindungsgemäß dadurch unterstützt, daß das Tragelement mindestens eine Kurvenrolle zur Führung entlang der Kurvenbahn sowie einen Abnehmer zur Führung entlang des Kurvensegmentes aufweist.

Ein verschleißarmer Betrieb wird dadurch unterstützt, daß als Abnehmer eine Kurvenrolle verwendet wird.

Erfindungsgemäß wird das Kurvensegment von einem Stellelement positioniert zur Vorgabe einer jeweiligen Positionierung des Kurvensegmentes.

Eine kompakte Anordnung wird erfindungsgemäß auch dadurch unterstützt, daß das Stellelement eine im wesentlichen radial ausgerichtete Stellkraft auf das Kurvensegment ausübt.

Eine einfache Positionsvorgabe für das Kurvensegment kann dadurch erfolgen, daß das Stellelement das Kurvensegment verschwenkt.

Die Durchführung von Ausweichbewegungen in eine radial nach innen weisenden Richtung wird dadurch ermöglicht, daß das Tragelement bei einem radial nach innen positionierten Kurvensegment seine Ruhepositionierung und bei einem in radialer Richtung nach außen positionierten Kurvensegment seine Arbeitspositionierung einnimmt.

Eine Durchführung von Übergabevorgängen wird dadurch unterstützt, daß ein Tragarm des Tragelementes entlang seines Bewegungsweges verschwenkt wird.

Ebenfalls trägt es zur Unterstützung einer Materialhandhabung bei, daß ein Tragarm des Tragelementes entlang seines Bewegungsweges teleskopiert wird.

Eine Übernahme und Abgabe von Werkstücken wird dadurch erleichtert, daß Übergabevorgänge unter Verwendung von zangenartigen Handhabungselementen durchgeführt werden.

Die Durchführung einer Entkopplung von Übergabevorgängen sowohl in einem Eingabebereich als auch in einem Ausgabebereich des Übergaberades wird dadurch unterstützt, daß die Tragelemente unter Verwendung von positionierbaren Kurvensegmenten sowohl in einem Eingabebereich als auch in einem Ausgabebereich vorgebbar in eine Arbeitspositionierung oder in einer Ruhepositionierung angeordnet werden.

In den Zeichnungen sind Ausführungsbeispiele der Erfindung schematisch dargestellt. Es zeigen:
- Fig. 1: Eine perspektivische Darstellung einer Blasstation zur Herstellung von Behältern aus Vorformlingen,
- Fig. 2: einen Längsschnitt durch eine Blasform, in der ein Vorformling gereckt und expandiert wird,
- Fig. 3: eine Skizze zur Veranschaulichung eines grundsätzlichen Aufbaus einer Vorrichtung zur Blasformung von Behältern,
- Fig. 4: eine modifizierte Heizstrecke mit vergrößerter Heizkapazität,
- Fig. 5: eine perspektivische Darstellung eines Übergaberades mit einer Mehrzahl von positionierbaren Tragarmen,
- Fig. 6: eine perspektivische Darstellung des Übergaberades gemäß Fig. 5 schräg von unten in einer entkoppelten Positionierung,
- Fig. 7: das Tragrad gemäß Fig. 6 in einer eingekoppelten Positionierung der Tragarme.

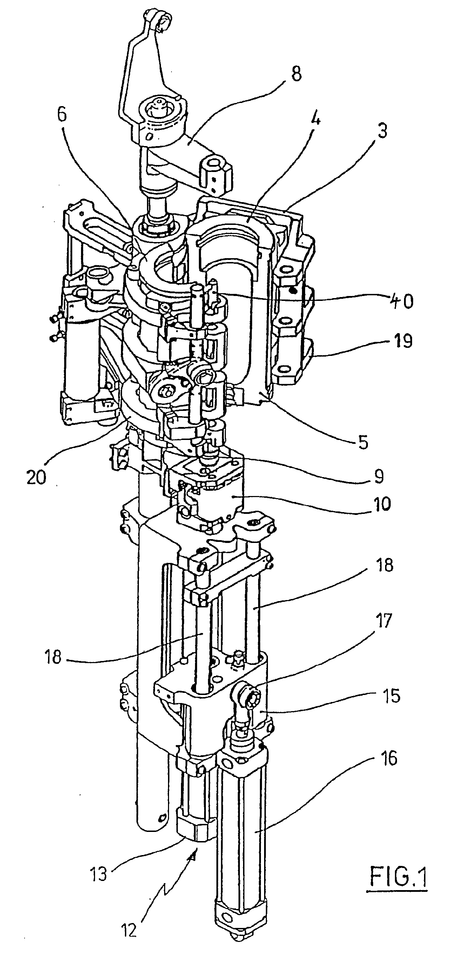

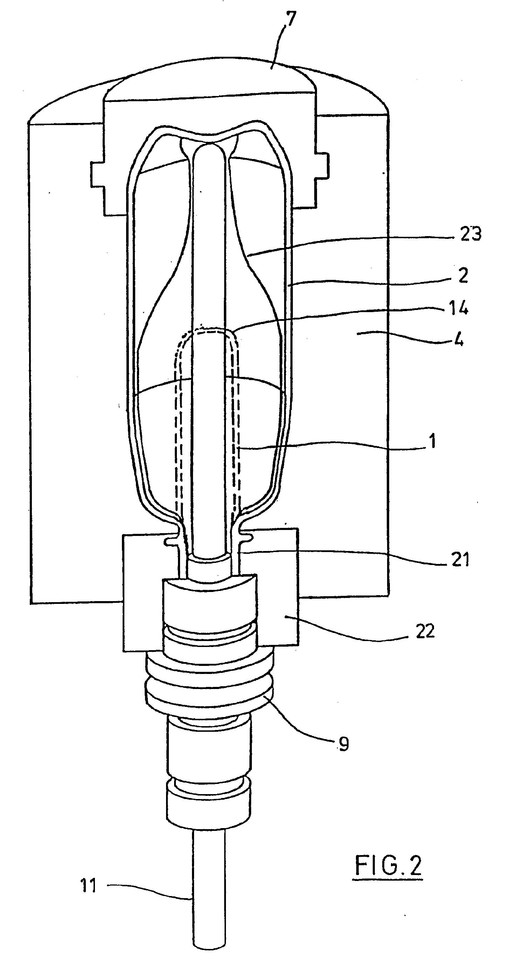

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine Tandem-Anordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine Verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

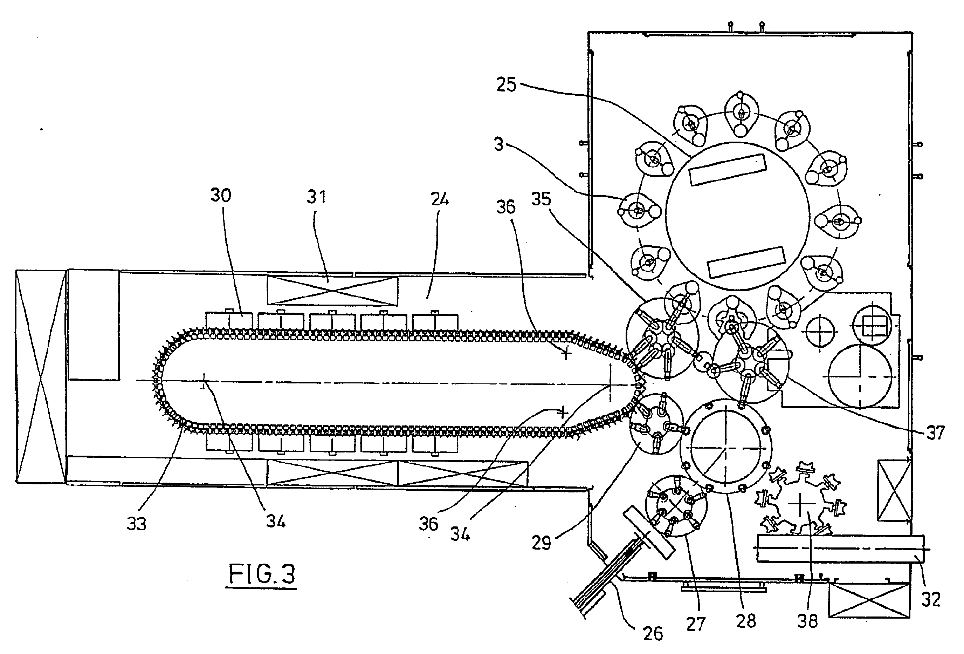

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizstrahler (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimen-sionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine Vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

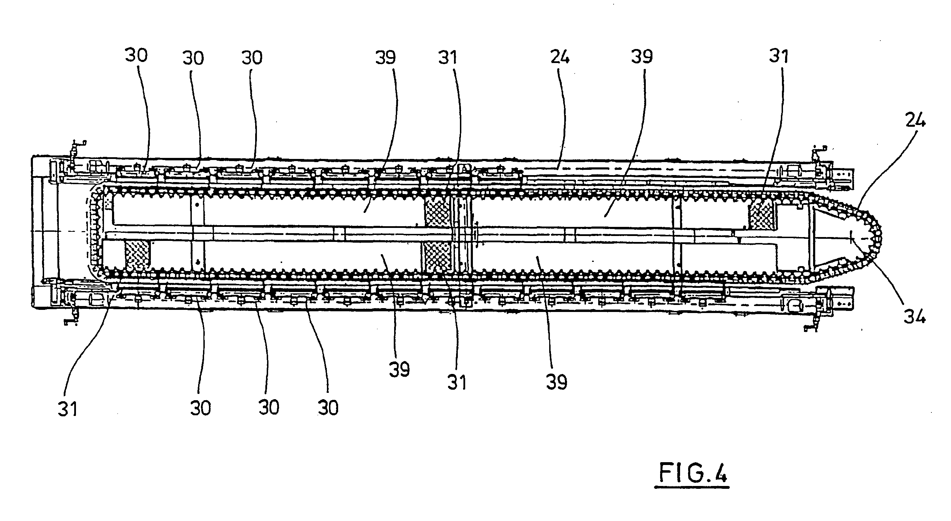

In der in Fig. 4 dargestellten modifizierten Heizstrekke (24) können durch die größere Anzahl von Heizstrahlern (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizstrahlern (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizstrahlern (30) gegenüberliegenden Oberflächen Reflektoren für die Heizstrahlung bereitstellen, ebenfalls ist es möglich, über die abgegebene Kühlluft auch eine Kühlung der Heizstrahler (30) zu realisieren.

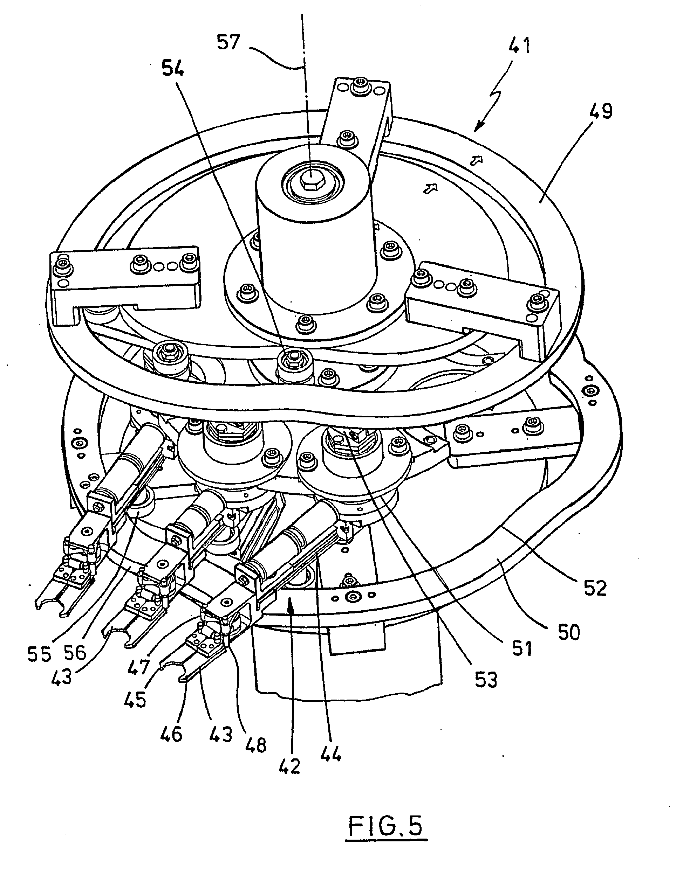

Fig. 5 zeigt ein Übergaberad (41), das beispielsweise an die Positionen für mindestens eines der Übergaberäder (27, 28, 29) eingebaut werden kann. Das Übergaberad (41) ist mit Tragelementen (42) versehen, die zur Handhabung von Vorformlingen (1) und/oder Behältern (2) dienen. Beim dargestellten Ausführungsbeispiel ist das Tragelement (42) aus einem Handhabungselement (43) und einem Tragarm (44) ausgebildet. Das Handhabungselement (43) ist beim dargestellten Ausführungsbeispiel zangenartig realisiert und weist zwei Zangenarme (45, 46) auf, die relativ zu Drehachsen (47, 48) verschwenkbar vom Tragarm (44) gehalten sind. Derartige Handhabungselemente (43) ergreifen die Vorformlingen (1) oder Behälter (2) direkt. Die Handhabungselemente (43) können aber auch derart realisiert sein, daß ein Kontakt mit Transportelementen vorgesehen ist, die ihrerseits die Vorformlinge (1) oder Behälter (2) tragen. Ein derartiges Transportelement kann beispielsweise als Transportdorn (9) realisiert sein, auf den die Vorformlinge (1) aufgesteckt werden oder in den die Vorformlinge (1) mit ihrem Mündungsbereich eingeführt werden.

Fig. 5 veranschaulicht, daß zur Steuerung von Positionierbewegungen der Tragelemente (42) zwei Kurvenbannen (49, 50) verwendet sind, die in vertikaler Richtung übereinander angeordnet sind. Die Tragarme (44) sind über Schwenkgelenke (51) an einem Zentralelement (52) des Übergaberades (41) befestigt. Im Bereich der Schwenkgelenke (51) weisen die Tragarme (54) Querhebel (53), auf die über eine Kurvenrolle (54) entlang der Kurvenbahn (49) geführt sind. Bei einer Rotation des Zentralelementes (52) werden hierdurch Schwenkbewegungen der Tragarme (44) vorgegeben. Am dargestellten Ausführungsbeispiel sind die Kurvenrollen (54) innenseitig entlang der Kurvenbahn (49) geführt. Die Tragarme (44) sind teleskopierbar ausgebildet und unter Verwendung einer Kurvenrolle (55) entlang der Kurvenbahn (50) geführt, um eine Teleskopierbewegung des Tragarmes (44) vorzugeben. Bei dem dargestellten Ausführungsbeispiel ist auch die Kurvenrolle (55) innenseitig entlang der Kurvenbahn (50) geführt.

Aus Fig. 5 ist erkennbar, daß im Bereich der Kurvenbahn (50) ein bewegliches Kurvensegment (56) angeordnet ist. Das Kurvensegment (56) ist leicht nach innen verschwenkt und hebt hierdurch die Kurvenrolle (55) des mittleren dargestellten Tragarmes (44) von der Innenseite der Kurvenbahn (50) ab. Der mittlere Tragarm (44) ist hierdurch mit seinem Handhabungselement (43) relativ zu einer Drehachse (57) des Übergaberades (41) weiter innen angeordnet, als es einer Arbeitspositionierung entsprechen würde. Das Handhabungselement (43) wird hierdurch aus dem Bereich einer vorgesehenen Übergabe weggeführt.

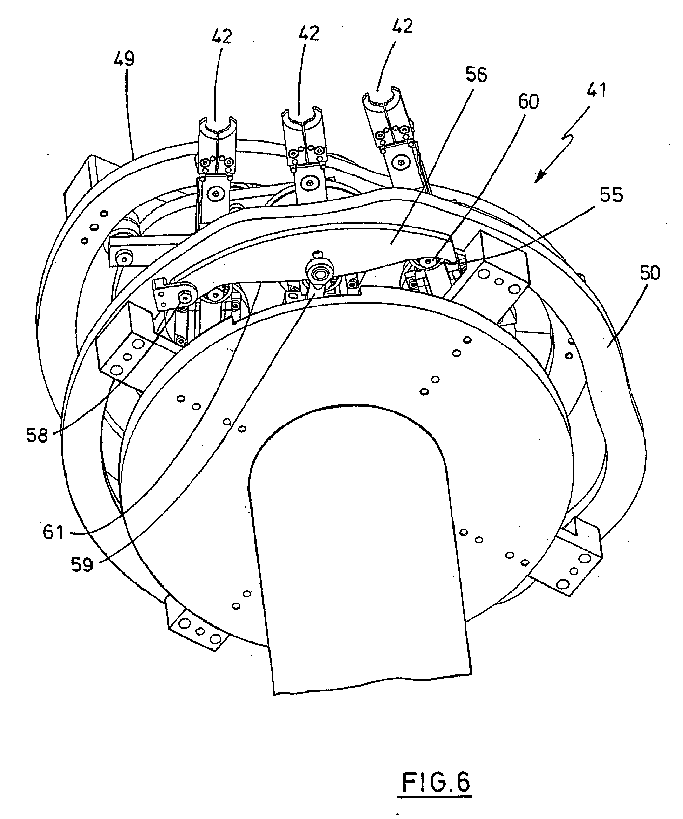

Fig. 6 zeigt das Übergaberad (41) gemäß Fig. 5 in einer perspektivischen Darstellung von unten. Insbesondere ist das Kurvensegment (56) zu erkennen. Das Kurvensegment (56) ist im Bereich seines einen Endes von einem Schwenkgelenk (58) drehbeweglich mit der Kurvenbahn (50) verbunden. Darüber hinaus greift am Kurvensegment (56) ein Stellelement (59) an, daß beim dargestellten Ausführungsbeispiel als ein Pneumatikzylinder ausgeführt ist. Das Stellelement (59) ist drehbeweglich mit dem Kurvensegment (56) gekoppelt. Beim dargestellten Ausführungsbeispiel ist das Kurvensegment (56) in lotrechter Richtung unterhalb der Kurvenbahn (50) angeordnet. Die Tragarme (54) weisen Abnehmer (60) auf, die zur Führung entlang des Kurvensegmentes (56) vorgesehen sind. Vorteilhafter Weise werden die Abnehmer (60) als Kurvenrollen ausgeführt.

Beim dargestellten Ausführungsbeispiel sind die Abnehmer (60) mit ihren Drehachsen als Verlängerung der Kurvenrollen (55) angeordnet. Dies erleichtert eine kontinuierliche Überleitung der Führung der Tragarme (44) von einer Bewegung der Kurvenrollen (55) entlang der Kurvenbahn (50) in eine Führung des Abnehmers (60) entlang des Kurvensegments (56) sowie eine erneute Anlage der Kurvenrollen (55) an der Kurvenbahn (50).

Eine Führungskontur (61) des Kurvensegmentes (56) ist derart gestaltet, daß ebenfalls eine kontinuierliche Bewegungsüberleitung unterstützt wird. Hierdurch werden insbesondere auch hohe Umdrehungszahlen des Übergaberades (41) ermöglicht.

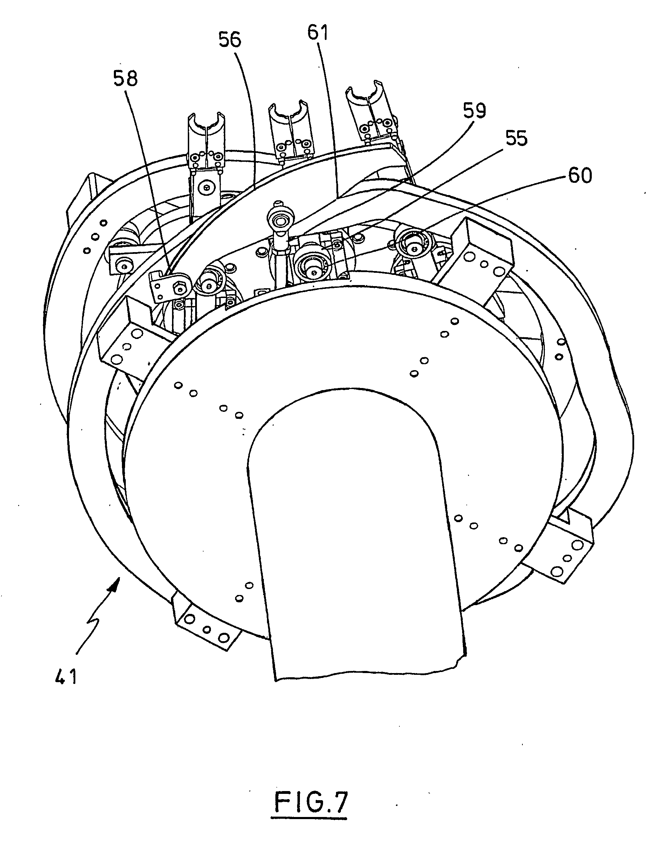

Fig. 7 zeigt das Übergaberad in der Ansicht gemäß Fig. 6 nach einer Positionierung des Kurvensegmentes (56) in einer Arbeitsanordnung. Der Abnehmer (60) wird hierdurch nicht mehr entlang des Führungskontur (61) geführt und die Kurvenrolle (55) des Tragarmes (44) kann wieder entlang der Kurvenbahn (50) entlanggeführt werden.

Fig. 6 und Fig. 7 verdeutlichen nochmals, daß die Tragarme (54) nur im Bereich des Kurvensegmentes (56) eine Bewegungsbahn durchlaufen, die von der Standardbewegungsbahn abweicht. Die vorgesehene Entkopplung bei der Durchführung von Übergabevorgängen kann hierdurch mit sehr geringem apparativen Aufwand realisiert werden.

Unter einer Arbeitspositionierung der Tragelemente (42) beim rotierenden Übergaberad (41) wird vorstehend eine Anordnung verstanden, bei der die Tragelemente (42) mit ihren Handhabungselementen (43) in mindestens einen vorgesehenen Übergabebereich hineingeführt werden und hier eine Handhabung von Vorformlingen (1) oder Behältern (2) durchführen. Unter einer Ruhepositionierung wird verstanden, daß die Tragelemente (42) mit ihren Handhabungselementen (43) bei der Durchführung ihres vom Übergaberad (41) vorgegebenen Umlaufweges in mindestens einem vorgesehenen Übergabebereich von diesem Übergabebereich ferngehalten werden, so daß das Handhabungselement (43) einen bei einem üblichen Arbeitsablauf vorgesehenen Übergabevorgang nicht durchführt und aus einem potentiellen Kollisionsbereich ferngehalten wird.

Das Umschalten des Kurvensegmentes (56) von der Arbeitsposition in die Ruheposition sowie in umgekehrter Richtung kann insbesondere unter Produktionsbedingungen erfolgen, d.h. bei einer vollen Drehzahl des Übergaberades (41). Hierdurch bleibt die Synchronität einer Mehrzahl verwendeter Übergaberäder (41) zueinander und zu weiteren Funktionsbaugruppen erhalten.

## Patentansprüche

1. Verfahren zur Blasformung von Behältern (2), bei dem ein Vorformling (1) zunächst thermisch konditioniert und anschließend innerhalb einer Blasform (4) durch Blasdruckeinwirkung in den Behälter (2) umgeformt wird sowie bei dem die Vorformlinge (1) mindestens entlang eines Teiles ihres Transportweges von einem Tragelement (42) positioniert werden, das von einem rotierendem Übergaberad gehalten ist, relativ zu dem das Tragelement (42) beweglich gelagert ist und bei dem das Tragelement (42) von einer Kurvensteuerung positioniert wird, wobei das Tragelement (42) mit einem beweglichen Kurvensegment (56) der Kurvensteuerung derart koppelbar ist, daß das Tragelement (42) Innerhalb eines Übergabebereiches für Behälter (2) oder Vorformlinge (1) steuerbar derart entweder in einer Arbeitspositionierung oder in einer Ruhepositionierung angeordnet wird, dass innerhalb der Arbeitspositionierung das Tragelement (42) in einen Übergabebereich hineingeführt wird und hier eine Handhabung von Vorformlingen (1) oder Behältern (2) durchführt, dass in der Ruhepositionierung das Tragelement von dem Übergabebereich und aus einem potentiellen Kollisionsbereich ferngehalten wird und einen Übergabevorgang nicht durchführt, wobei das Tragelement (42) mit mindestens einer Kurvenrolle (55) entlang einer Kurvenbahn (50) der Kurvensteuerung sowie einem Abnehmer (60) entlang des Kurvensegmentes (56) geführt wird, und wobei das Kurvensegment (56) von einem Stellelement (59) positioniert wird, **dadurch gekennzeichnet, dass** das bewegliche Kurvensegment (56) auf einem anderen Höhenniveau als die Kurvenbahn (50) angeordnet wird und dass das Stellelement (59) eine im wesentlichen radial ausgerichtete Stellkraft auf das Kurvensegment (56) ausübt, um das Kurvensegment (56) von einer Arbeitsposition in eine Ruheposition sowie in umgekehrter Richtung umzuschalten, wobei, nach einer Positionierung des Kurvensegmentes (56) in der Arbeitsposition, der Abnehmer (60) entlang des Kurvensegmentes (56) geführt wird, so dass die Kurvenrolle (55) von der Kurvenbahn (50) abgehoben und das Tragelement (42) in der Ruhepositionierung angeordnet wird, und nach einer Positionierung des Kurvensegmentes (56) in der Ruheposition, die Kurvenrolle (54) entlang der Kurvenbahn (50) und der Abnehmer (60) nicht entlang des Kurvensegmentes (56) geführt wird, so dass das Tragelement (42) in der Arbeitspositionierung angeordnet wird.

2. Verfahren nach Anspruch 1, **dadurch gekennzeichnet, daß** als Abnehmer (60) eine Kurvenrolle verwendet wird.

3. Verfahren nach einem der Ansprüche 1 oder 2, **dadurch gekennzeichnet, daß** das Stellelement (59) das Kurvensegment (56) verschwenkt.

4. Verfahren nach einem der Ansprüche 1 bis 3, **dadurch gekennzeichnet, daß** das Tragelement (52) bei einem radial nach innen positionierten Kurvensegment (56) seine Ruhepositionierung und bei einem in radialer Richtung nach außen positionierten Kurvensegment seine Arbeitspositionierung einnimmt.

5. Verfahren nach einem der Ansprüche 1 bis 4, **dadurch gekennzeichnet, daß** ein Tragarm (44) des Tragelementes (42) entlang seines Bewegungsweges verschwenkt wird.

6. Verfahren nach einem der Ansprüche 1 bis 5, **dadurch gekennzeichnet, daß** ein Tragarm (44) des Tragelementes (42) entlang seines Bewegungsweges teleskopiert wird.

7. Verfahren nach einem der Ansprüche 1 bis 6, **dadurch gekennzeichnet, daß** Übergabevorgänge unter Verwendung von zangenartigen Handhabungselementen (43) durchgeführt werden.

8. Verfahren nach einem der Ansprüche 1 bis 7, **dadurch gekennzeichnet, daß** die Tragelemente (42) unter Verwendung von positionierbaren Kurvensegmenten (56) sowohl in einem Eingabebereich als auch in einem Ausgabebereich vorgebbar in einer Arbeitspositionierung oder in einer Ruhepositionierung angeordnet werden.

9. Vorrichtung zur Blasformung von Behältern (2), die mindestens eine Blasstation (3) mit einer Blasform (4) und mindestens ein Tragelement (42) zur Positionierung von Vorformlingen (1) entlang eines Transportweges aufweist, das von einem rotierenden Übergaberad gehalten ist, relativ zu dem das Tragelement (42) beweglich gelagert ist, sowie die eine Kurvensteuerung für das Tragelement (42) aufweist, wobei die Kurvensteuerung ein bewegliches Kurvensegment (56) aufweist, und bei der das bewegliche Kurvensegment (56) das Trageelement (42) innerhalb eines Übergabebereiches für Behälter (2) oder Vorformlinge (1) vorgebbar derart entweder in einer Arbeitsposition oder in einer Ruheposition anordnet, dass innerhalb der Arbeitspositionierung das Tragelement (42) in einen Übergabebereich hineingeführt wird und hier eine Handhabung von Vorformlingen (1) oder Behältern (2) durchführt, dass in der Ruhepositionierung das Tragelement von dem Übergabebereich und aus einem potentiellen Kollisionsbereich ferngehalten wird und einen Übergabevorgang nicht durchführt, wobei das Tragelement (42) mindestens eine Kurvenrolle (55) zur Führung entlang einer Kurvenbahn (50) der Kurvensteuerung und einen Abnehmer (60) zur Führung entlang des Kurvensegmentes (56) aufweist, und wobei das Kurvensegment (56) mit einem Stellelement (59) zur Positionsvorgabe gekoppelt ist, **dadurch gekennzeichnet, daß** das Kurvensegment (56) auf einem anderen Höhenniveau als die Kurvenbahn (49, 50) angeordnet ist und dass das Stellelement (59) mit einer Längsachse im wesentlichen in einer radialen Richtung bezüglich einer Drehachse (57) des Übergaberades (41) angeordnet ist, um das Kurvensegment (56) von einer Arbeitsposition in eine Ruheposition sowie in umgekehrter Richtung umzuschalten, wobei, nach einer Positionierung des Kurvensegmentes (56) in der Arbeitsposition, der Abnehmer (60) entlang des Kurvensegmentes (56) geführt wird, so dass die Tragelement Kurvenrolle (55) von der Kurvenbahn (50) abgehoben und das Tragelement (42) in der Ruhepositionierung angeordnet wird, und nach einer Positionierung des Kurvensegmentes (56) in der Ruheposition, die Kurvenrolle (54) entlang der Kurvenbahn (50) und der Abnehmer (60) nicht entlang des Kurvensegmentes (56) geführt wird, so dass das Tragelement (42) in der Arbeitspositionierung angeordnet wird.

10. Vorrichtung nach Anspruch 9, **dadurch gekennzeichnet, daß** der Abnehmer (60) als eine Kurvenrolle ausgebildet ist.

11. Vorrichtung nach einem der Ansprüche 9 oder10, **dadurch gekennzeichnet, daß** das Kurvensegment (56) verschwenkbar angeordnet ist.

12. Vorrichtung nach einem der Ansprüche 9 bis 11, **dadurch gekennzeichnet, daß** das Kurvensegment (56) in einer radialen Richtung nach außen in einer Ausgangspositionierung und in einer radialer Richtung nach innen in einer Entkopplungspositionierung angeordnet ist.

13. Vorrichtung nach einem der Ansprüche 9 bis 12, **dadurch gekennzeichnet, daß** das Tragelement (42) verschwenkbar angeordnet ist.

14. Vorrichtung nach einem der Ansprüche 9 bis 13, **dadurch gekennzeichnet, daß** das Tragelement (42) teleskopierbar angeordnet ist.

15. Vorrichtung nach einem der Ansprüche 9 bis 14, **dadurch gekennzeichnet, daß** das Tragelement (42) mit einem zangenartigen Handhabungselement (43) versehen ist

16. Vorrichtung nach einem der Ansprüche 9 bis 15, **dadurch gekennzeichnet, daß** das Übergaberad (41) mit zwei positionierbaren Kurvensegmenten (56) versehen ist.

## Claims

1. A method for the blow moulding of containers (2) wherein
a preform (1), after having been conditioned thermally, is moulded in a blow mould (4) by the action of blowing pressure to form the container (2) and wherein the preforms (1) are positioned by a carrying element (42) at least along a part of their transport path, said carrying element (42) being held by a rotating transfer wheel in relation to which the carrying element (42) is mounted in a movable manner, and in which method the carrying element (42) is positioned by a cam control, wherein the carrying element (42) can be coupled to a movable cam segment (56) of the cam control in such a manner that the carrying element (42) is arranged within a transfer region for containers (2) or preforms (1) in a controllable manner either in a working position or in a rest position in such a manner that, in the working position, the carrying element (42) is fed into a transfer region where it carries out a handling of preforms (1) or containers (2) and that, in the rest position, the carrying element is kept away from the transfer region and from a potential collision region and does not perform a transfer operation, wherein the carrying element (42) is led along a cam track (50) of the cam control with at least one cam roller (55) and along the cam segment (56) with a catcher and wherein the cam segment (56) is positioned by a control member (59),
**characterised in that**
- the movable cam segment (56) is arranged at a height level that is different from that of the cam track (50) and that the control member (59) exerts an actuating force on the cam segment (56) that is, in essence, oriented in radial direction, in order to switch the cam segment (56) from a working position to a rest position as well as vice versa, wherein, after the cam segment (56) has been positioned in the working position, the catcher (60) is led along the cam segment (56), with the result that the cam roller (55) is lifted from the cam track (50) and the carrying element (42) is arranged in the rest position, and, after the cam segment (56) has been positioned in the rest position, the cam roller (54) is led along the cam track (50) and the catcher (60) is not led along the cam segment (56), with the result that the carrying element (42) is arranged in the working position.

2. The method according to Claim 1, **characterised in that** a cam roller is used as catcher (60).

3. The method according to any one of Claims 1 or 2, **characterised in that** the control member (59) pivots the cam segment (56).

4. The method according to any one of Claims 1 to 3, **characterised in that** the carrying element (52) takes its rest position when the cam segment (56) is positioned in a radially inward position and takes its working position when the cam segment is positioned in a radially outward direction.

5. The method according to any one of Claims 1 to 4, **characterised in that** a support arm (44) of the carrying element (42) is pivoted along its path of movement.

6. The method according to any one of Claims 1 to 5, **characterised in that** a support arm (44) of the carrying element (42) is telescoped along its path of movement.

7. The method according to any one of Claims 1 to 6, **characterised in that** transfer operations are performed with use being made of gripper-like handling elements (43).

8. The method according to any one of Claims 1 to 7, **characterised in that**, with use being made of curve segments (56) that are capable of being positioned, the carrying elements (42) are arranged in a presettable manner in a working position or in a rest position, both in an input region and an output region.

9. A device for the blow moulding of containers (2), which comprises at least one blowing station (3) having a blow mould (4) and at least one carrying element (42) for positioning preforms (1) along a transport path, said carrying element (42) being held by a rotating transfer wheel in relation to which the carrying element (42) is mounted in a movable manner, the device also comprising a cam control for the carrying element (42), wherein the cam control comprises a movable cam segment (56), and in which device the movable cam segment (56) arranges the carrying element (42) within a transfer region for containers (2) or preforms (1) in a presettable manner either in a working position or in a rest position in such a manner that, in the working position, the carrying element (42) is fed into a transfer region where it carries out a handling of preforms (1) or containers (2) and that, in the rest position, the carrying element is kept away from the transfer region and from a potential collision region and does not perform a transfer operation, wherein the carrying element (42) comprises at least one cam roller (55) for being led along a cam track (50) of the cam control and a catcher (60) for being led along the cam segment (56) and wherein the cam segment (56) is coupled to a control member (59) for presetting the position,
**characterised in that**
- the cam segment (56) is arranged at a height level that is different from that of the cam track (49, 50) and that, with a longitudinal axis, the control member (59) is, in essence, arranged in a radial direction in relation to a rotational axis (57) of the transfer wheel (41), in order to switch the cam segment (56) from a working position to a rest position as well as vice versa, wherein, after the cam segment (56) has been positioned in the working position, the catcher (60) is led along the cam segment (56), with the result that the cam roller (55) is lifted from the cam track (50) and the carrying element (42) is arranged in the rest position, and, after the cam segment (56) has been positioned in the rest position, the cam roller (54) is led along the cam track (50) and the catcher (60) is not led along the cam segment (56), with the result that the carrying element (42) is arranged in the working position.

10. The device according to Claim 9, **characterised in that** the catcher (60) is designed as a cam roller.

11. The device according to any one of Claims 9 or 10, **characterised in that** the cam segment (56) is arranged such that it can be pivoted.

12. The device according to any one of Claims 9 to 11, **characterised in that** the cam segment (56), when in a radially outward direction, is arranged in an output position and, when in a radially inward direction, is arranged in a decoupling position.

13. The device according to any one of Claims 9 to 12, **characterised in that** the carrying element (42) is arranged such that it can be pivoted.

14. The device according to any one of Claims 9 to 13, **characterised in that** the carrying element (42) is arranged such that it can be telescoped.

15. The device according to any one of Claims 9 to 14, **characterised in that** the carrying element (42) is provided with a gripper-like handling element (43).

16. The device according to any one of Claims 9 to 15, **characterised in that** the transfer wheel (41) is provided with two cam segments (56) that are capable of being positioned.

## Revendications

1. Procédé de moulage par soufflage de récipients (2) dans le cadre duquel une préforme (1) est tout d'abord soumise à un conditionnement thermique puis est transformée à l'intérieur d'un moule de soufflage (4) en récipient (2) sous l'action d'une pression de soufflage et les préformes (1) étant, le long d'une partie au moins de leur parcours, positionnées par un élément porteur (42) maintenu par une roue de transfert en rotation par rapport à laquelle l'élément porteur (42) est mobile et dans le cadre duquel l'élément porteur (42) est positionné par une commande à came, l'élément porteur (42) pouvant être couplé avec un segment de came (56) mobile de la commande à came de sorte que l'élément porteur (42) puisse, à l'intérieur d'une zone de transfert de récipients (2) ou de préformes (1), être placé de façon commandée soit en un positionnement de travail, soit en un positionnement de repos de sorte qu'en positionnement de travail l'élément porteur (42) est introduit dans une zone de transfert où il exécute une manipulation de préformes (1) ou de récipients (2) et qu'en positionnement de repos l'élément porteur est éloigné de la zone de transfert et d'une zone de collision potentielle et n'exécute pas d'opération de transfert, l'élément porteur (42) étant guidé avec au moins un galet de came (55) le long d'une piste de came (50) de la commande à came ainsi qu'un élément détacheur (60) le long du segment de came (56), et le segment de came (56) étant positionné par un élément de réglage (59), **caractérisé en ce que** le segment de came mobile (56) est agencé à un niveau de hauteur différent de celui de la piste de came (50) et que l'élément de réglage (59) exerce sur le segment de came (56) une force de réglage essentiellement radiale pour faire passer le segment de came (56) d'une position de travail en une position de repos et inversement cependant que, après un positionnement du segment de came (56) en position de travail, l'élément détacheur (60) est guidé le long du segment de came (56) de sorte que le galet de came (55) se détache de la piste de came (50) et que l'élément porteur (42) soit placé en positionnement de repos, et que, après un positionnement du segment de came (56) en position de repos, le galet de came (54) est guidé le long de la piste de came (50) et que l'élément détacheur (60) n'est pas guidé le long du segment de came (56), de sorte que l'élément porteur (42) est placé en positionnement de travail.

2. Procédé selon la revendication 1, **caractérisé en ce que** l'on utilise comme élément détacheur (60) un galet de came.

3. Procédé selon l'une des revendications 1 ou 2, **caractérisé en ce que** l'élément de réglage (59) fait pivoter le segment de came (56).

4. Procédé selon l'une des revendications 1 à 3, **caractérisé en ce que** l'élément porteur (52) se place en positionnement de repos lorsque le segment de came (56) est positionné radialement vers l'intérieur et en positionnement de travail lorsque le segment de came est positionné radialement vers l'extérieur.

5. Procédé selon l'une des revendications 1 à 4, **caractérisé en ce qu**'un bras de support (44) de l'élément porteur (42) pivote le long de son parcours.

6. Procédé selon l'une des revendications 1 à 5, **caractérisé en ce qu**'un bras de support (44) de l'élément porteur (42) est télescopé le long de son parcours.

7. Procédé selon l'une des revendications 1 à 6, **caractérisé en ce que** des opérations de transfert sont exécutées en mettant en oeuvre des éléments de manipulation de type à pince (43).

8. Procédé selon l'une des revendications 1 à 7, **caractérisé en ce que** les éléments porteurs (42) sont, aussi bien dans une zone d'introduction que dans une zone de sortie, agencés de façon prédéfinissable en une positionnement de travail ou en une positionnement de repos en employant des segments de came (56) pouvant être positionnés.

9. Dispositif de moulage par soufflage de récipients (2), présentant au moins une station de soufflage (3) avec un moule de soufflage (4) et au moins un élément porteur (42) assurant le positionnement des préformes (1) le long d'un parcours et étant maintenu par une roue de transfert en rotation par rapport à laquelle l'élément porteur (42) est mobile, et présentant une commande à came pour l'élément porteur (42), la commande à came présentant un segment de came mobile (56), et pour lequel dispositif le segment de came mobile (56) place de façon prédéfinissable, à l'intérieur d'une zone de transfert de récipients (2) ou de préformes (1), l'élément porteur (42) en une position de travail ou en une position de repos telle qu'en positionnement de travail l'élément porteur (42) est introduit dans une zone de transfert où il exécute une manipulation de préformes (1) ou de récipients (2), et qu'en positionnement de repos l'élément porteur est éloigné de la zone de transfert et d'une zone de collision potentielle et n'exécute pas d'opération de transfert, l'élément porteur (42) présentant au moins un galet de came (55) le guidant le long d'une piste de came (50) de la commande à came et un élément détacheur (60) le guidant le long du segment de came (56), et le segment de came (56) étant couplé à un élément de réglage (59) pour fixer la position, **caractérisé en ce que** le segment de came (56) est agencé à un niveau de hauteur différent de celui de la piste de came (49, 50) et que l'élément de réglage (59) est, avec un axe longitudinal, agencé selon une orientation essentiellement radiale par rapport à un axe de rotation (57) de la roue de transfert (41) pour faire passer le segment de came (56) d'une position de travail en une position de repos et inversement, cependant que, après un positionnement du segment de came (56) en position de travail, l'élément détacheur (60) est guidé le long du segment de came (56) de sorte que le galet de came (55) se détache de la piste de came (50) et que l'élément porteur (42) soit placé en positionnement de repos, et que, après un positionnement du segment de came (56) en position de repos, le galet de came (54) est guidé le long de la piste de came (50) et que l'élément détacheur (60) n'est pas guidé le long du segment de came (56), de sorte que l'élément porteur (42) est placé en positionnement de travail.

10. Dispositif selon la revendication 9, **caractérisé en ce que** l'élément détacheur (60) est réalisé sous forme de galet de came.

11. Dispositif selon l'une des revendications 9 à 10, **caractérisé en ce que** le segment de came (56) est disposé de façon à pouvoir pivoter.

12. Dispositif selon l'une des revendications 9 à 11, **caractérisé en ce que** le segment de came (56) est placé radialement vers l'extérieur en un positionnement de départ et radialement vers l'intérieur en un positionnement de découplage.

13. Dispositif selon l'une des revendications 9 à 12, **caractérisé en ce que** l'élément porteur (42) est disposé de façon à pouvoir pivoter.

14. Dispositif selon l'une des revendications 9 à 13, **caractérisé en ce que** l'élément porteur (42) est disposé de façon à pouvoir être télescopé.

15. Dispositif selon l'une des revendications 9 à 14, **caractérisé en ce que** l'élément porteur (42) est doté d'un élément de manipulation de type à pince (43).

16. Dispositif selon l'une des revendications 9 à 15, **caractérisé en ce que** la roue de transfert (41) est dotée de deux segments de came (56) pouvant être positionnés.
